# FASCICULE DE BREVET EUROPEEN

(11) **EP 0 728 819 B1**
(45) Date de publication et mention de la délivrance du brevet: **21.04.1999**
(21) Numéro de dépôt: 96400171.3
(22) Date de dépôt: 25.01.1996
(51) Int. Cl.: C09D 5/14

(54) **Peintures antisalissures autopolissables**
Selbstpolierende anwuchsverhindernde Anstrichfarben
Self-polishing anti-fouling paints

(30) Priorité: 26.01.1995 FR 9500872
(43) Date de publication de la demande: 28.08.1996
(73) Titulaire: ETAT-FRANCAIS représenté par le DELEGUE GENERAL POUR L'ARMEMENT, F-75997 Paris Armées (FR)
(72) Inventeur: Cambon, Christian, F-83110 Sanary (FR)

(56) Documents cités:
- EP-A- 0 364 271
- EP-A- 0 471 204
- EP-A- 0 529 693
- US-A- 3 623 896

## Description

La présente invention concerne les peintures autopolissables destinées à empêcher la prolifération de micro-organismes marins, par application sur un objet au moins partiellement immergé, notamment sur les carènes de navires de surface ou de sous-marins.

Les peintures empêchant la prolifération de micro-organismes marins sont appelées peintures antisalissures dans la suite du texte.

La croissance d'organismes marins sur les parties immergées des coques de navires augmente la résistance de la coque à l'avancement, entraînant une surconsommation de carburant et des perturbations de la discrétion acoustique des sous-marins. Ce problème a été résolu par l'application sur les coques de peintures antisalissures comportant des agents biocides détruisant les micro-organismes. Ces agents sont libérés dans la mer par diffusion à partir du feuil de la peinture. Les peintures antisalissures permettent ainsi de retarder l'envahissement des coques pendant des durées importantes.

Cependant ces peintures deviennent de plus en plus rugueuses en se dégradant progressivement, ce qui augmente la consommation de carburant, réduit les performances de navigation, et accroît le bruit hydrodynamique émis par la structure immergée. Cette nouvelle difficulté a été résolue en utilisant des peintures antisalissures autopolissables. En plus de posséder des agents biocides, ces peintures présentent, sous l'action de l'hydrolyse superficielle par l'eau de mer et de celle de l'érosion due au mouvement du navire, une perte régulière et contrôlée d'épaisseur en fonction du temps. La lente érosion du feuil en contact avec l'eau de mer permet de raviver constamment la surface en agents biocides et surtout, d'obtenir une surface à rugosité contrôlée.

Malheureusement, la quasi totalité de ce type de peintures contiennent des polymères à base d'étain (documents FR2266733, FR2557585, EP0051930, GB2118196), notamment des copolymères d'acrylate de tributylétain. Or, ces composés se sont révélés très polluants. Leur aspect négatif sur l'environnement consécutif à une utilisation intensive, conduit actuellement les fabricants à reformuler l'ensemble de leurs peintures antisalissures. La législation française récente a interdit l'usage des peintures autopolissables à base d'étain sur les carènes des navires de moins de 25 m. Cette interdiction devrait s'étendre aux autres types de bâtiments.

Dans certains pays à législation plus draconienne (Etats-Unis d'Amérique, pays scandinaves...) sont apparues sur le marché des peintures antisalissures conventionnelles ou même antisalissures autopolissables exemptes de copolymères organostanniques. De telles peintures sont pratiquement toujours formulées avec une proportion massive (jusqu'à 80% en poids du feuil sec) d'oxyde cuivreux (EP0051930, FR2557585), le liant principal étant à base de polymères spéciaux généralement du type acrylique. Ces alternatives n'apportent donc pas de solution durable pour protéger l'environnement de l'important rejet d'ions lourds, notamment ceux du cuivre consécutif à la mise en oeuvre intensive de peintures sans étain mais riches en cuivre (sous forme d'oxyde cuivreux Cu₂O).

L'invention a pour but de proposer des peintures antisalissures du type autopolissable ne comportant pas de liant prohibés et dont la propriété biocide n'est pas due aux dérivés du cuivre.

Ainsi, la présente invention a pour objet des peintures antisalissures autopolissables destinées a être appliquées sur un objet au moins partiellement immergé, notamment sur les coques de navires de surface ou de sous-marins, et contenant des constituants classiques des peintures tels que des solvants organiques, des pigments colorants, des agents mouillants, des agents dispersants ou des agents neutralisants, peintures caractérisées en ce qu'elles sont composées de:
- 5 à 60% massique d'au moins deux polymères ou copolymères (I) de la famille des polyacrylates d'alkyle ou des polyméthacrylates d'alkyle comprenant des fonctions acides carboxyliques, possédant des poids moléculaires compris entre 15 000 et 100 000g.mol⁻¹, chacun des polymères ayant un indice d'acide différent,
- 0.1 à 50% massique d'au moins un composé polyaminé (II) réagissant à température ambiante avec les fonctions carboxyliques des polymères (I)
- 0.1 à 60% massique d'au moins un composé organométallique dérivé du zinc, du fer, du manganèse ou du cobalt, à caractère biocide (III), à l'exclusion du cuivre et de l'étain
- 0 à 30% massique de polymères hydrophobes en poudre (IV) insolubles dans le milieu solvant de la peinture et non miscibles avec les liants principaux (I) et (II).

De préférence, l'indice d'acide d'un des copolymères (I) est élevé (supérieur à 50), l'autre copolymère a un indice d'acide moyen ou faible (entre 2 et 50) et l'éventuel troisième polymère possède un indice d'acide très faible, voire nul (entre 0 et 2). Les proportions relatives de ces polymères varient selon le type de résultat souhaité et l'application considérée.

De préférence, l'alkyle des esters acryliques ou méthacryliques a un nombre de carbone compris entre 1 et 4.

De préférence, encore, ces alkyles sont linéaires.

Le ou les composés polyaminés modificateurs de polymères (II) sont de préférence, des dérivés polyaminés non volatils (de température d'ébullition supérieure à 100°C). Préférentiellement, ce sont soit des dérivés amino-phénoliques, soit des dérivés cycloaliphatiques hydroxylés ou non. Ces composés sont susceptibles de réagir chimiquement à température ambiante avec les groupements acides carboxyliques des polymères acryliques ou méthacryliques (I), donnant naissance à un nouveau polymère par réticulation partielle ou totale et/ou par estérification entre les fonctions hydroxyles et les groupements acides carboxyliques des polyacrylates.

De préférence, la polyamine est une diamine, ou une triamine, primaire, secondaire ou tertiaire, il est préféré les triamines, celles-ci permettant une réticulation dans l'espace.

Préférentiellement, parmi les triamines tertiaires, on choisit celles possédant une fonction hydroxyle phénolique du type (A) ou une fonction hydroxyle cycloaliphatique du type (B) ci-dessous. Le Tri-(DiMéthylaminoMéthyl)-2,4,6-Phénol, appelé en abrégé TDMAMP 2,4,6 est pris en préférence parmi les molécules du type (A). 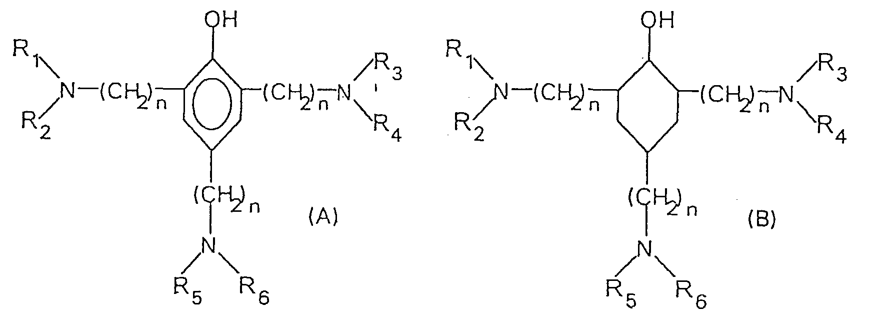 où R₁ à R₆ sont des alkyles, par exemple méthyles ou éthyles et n est un entier positif.

Le ou les produits à caractère biocide (III) ne comportent ni cuivre, ni étain, ni métaux lourds tels que le plomb, le mercure et autres métaux toxiques. Ils sont constitués d'un ou plusieurs dérivés de métaux déjà présents en abondance dans le milieux marin, facilement dégradables en sous-produits ultimes sans danger pour l'homme ni pour l'environnement sous-marin.

On peut citer particulièrement:
- l'éthylène-bis (dithiocarbamate) de manganèse ou mannèbe,
- l'éthylène-bis (dithiocarbamate) de zinc ou zinèbe,
- le diméthyl dithiocarbamate de zinc ou zirame,
- le Zinc-2 pyridinethiol N-oxyde ou pyrithione de zinc,
- -le Manganèse-2 pyridinethiol N-oxyde ou pyrithione de manganèse,
- le Fer-2 pyridinethiol N-oxyde ou pyrithione de fer
- les dérivés halogénés d'alkyl-isothiazolone.

Les polymères hydrophobes en poudre (IV) sont insolubles dans le milieu solvant de la peinture et non miscibles avec les liants principaux (I) et (II). Ils contribuent à la régulation de l'érosion des feuils secs et leur apporte une hydrophobie complémentaire.

Ces polymères sont préférentiellement présentés sous forme de poudre de quelques microns de granulométrie et peuvent être constituées par une poudre de polyoléfine halogénée ou non, par exemple une poudre de polyéthylène, de polyoléfine fluorée telle que le polyfluoroéthylène.

Le ou les polymères ou copolymères acryliques ou méthacryliques (I), sont préalablement mis en solution dans un solvant organique adéquat (préférentiellement des mélanges de solvants oxygénés tels que cétones, alcools, éthers). Les autres composés à l'exception du réactif modificateur aminé sont ensuite incorporés, dispersés et broyés selon les procédés classiques de fabrication des peintures. On obtient à ce stade une composition initiale qui est ensuite mise en présence du ou des produits modificateurs aminés (II). A température ambiante, ceux-ci vont réagir avec les groupements acides des polymères (I) pour donner de nouveaux polymères de poids moléculaires plus élevés. Les réactions chimiques peuvent être des réactions de réticulation partielle ou d'estérification, entre les groupements fonctionnels les plus réactifs de (I) et (II). Cette opération s'accompagne d'une nette augmentation de la viscosité de la préparation.

Il est intéressant de noter que, en plus des avantages écologiques (absence d'étain et de cuivre), ces peintures peuvent être de teintes diverses, dont le blanc, grâce à l'absence d'oxyde de cuivre. Bien entendu elles améliorent les avantages usuels des peintures antisalissures autopolissables à savoir:
- possibilité de moduler à la demande le taux d'érosion en adaptant les proportions respectives des composés (I), (Il) et (IV),
- efficacité antisalissures de longue durée,
- possibilité de les appliquer sur des fonds anticorrosion classiques,
- fabrication selon les procédés et les matériels traditionnels des peintures.

Pour mieux illustrer l'objet de la présente invention, quelques exemples sont décrits ci-dessous, dans le domaine des peintures pour navires.

Dans les exemples 1 à 5, le copolymère dit 55/5 est un copolymère de méthacrylate de méthyle et de n-butyle d'indice d'acide égal à 5 et de poids moléculaire compris entre 50 000 et 60 000 g.mol⁻¹. Le copolymère 60/124 est un copolymère de méthacrylate de méthyle et de n-butyle d'indice d'acide égal à 124 et de poids moléculaire compris entre 40 000 et 60 000 g.mol⁻¹. Les formulations des exemples 1 à 5 sont comparées aux formulations standards à base de composés organostanniques (exemples 6 à 8).

Les composés connus sous la dénomination commerciale BYK ANTITERRA U et BYK P104S sont des additifs pour peintures fournis par la société BYK CHIMIE.

Les copolymères connus sous la dénomination commerciale CUTINOX 1120 et CUTINOX 1000 sont commercialisés par la société ACIMA, le copolymère connu sous la dénomination commerciale BIOMET 304 est commercialisé par la société M and T CHEMICALS. Ce sont tous des copolymères d'acrylate de tributylétain, à 60% d'extrait sec.

### Exemple 1:

On prépare préalablement une composition initiale en mélangeant les produits suivants:

| Constituants | Parties en poids |
|---|---|
| Copolymère 55/5 | 14.81 % |
| Copolymère 60/124 | 6.48 % |
| Mélange de solvants oxygénés | 46.20 % |

On dissout sous agitation rapide jusqu'à l'obtention d'un vernis homogène, puis on incorpore des produits suivants dans ce vernis:

| Constituants | Fonction | Parties en poids |
|---|---|---|
| Pyrithione de zinc en poudre | agent biocide | 22.22 % |
| Polyoléfine fluorée en poudre | polymère hydrophobe | 1.48 % |
| Dioxyde de titane type rutile | pigment colorant | 2.96 % |
| Triéthylamine | agent neutralisant | 0.65 % |
| BYK ANTITERRA U | agent mouillant antisédimentation | 1.48 % |
| Triarylphosphate | agent plastifiant | 2.96 % |

On réalise l'empâtage puis on broie avec un broyeur à microbilles (procédé classique de fabrication des peintures). Enfin on incorpore le composé réactif aminé TDMAMP 2,4,6 dans cette peinture sous forte agitation pendant quelques minutes à température ambiante.

| Constituants | Fonction | Parties en poids |
|---|---|---|
| TDMAMP 2,4,6 | modificateur de polymères | 0.74 % |

On obtient une peinture selon l'invention antisalissure autopolissable sans cuivre ni étain, notée exemple 1.

### Exemple 2:

On prépare une peinture selon l'invention antisalissure autopolissable sans cuivre ni étain, notée exemple 2, selon un mode opératoire similaire à celui utilisé dans l'exemple 1, en mélangeant les produits suivants:

| Constituants | Fonction | Parties en poids |
|---|---|---|
| Copolymère 55/5 | | 14.81 % |
| Copolymère 60/124 | | 6.48 % |
| Mélange de solvants oxygénés | | 47.68 % |
| Pyrithione de zinc en poudre | agent biocide | 22.22 % |
| Dioxyde de titane type rutile | pigment colorant | 2.96 % |
| Triéthylamine | agent neutralisant | 0.65 % |
| BYK ANTITERRA U | agent mouillant antisédimentation | 1.48 % |
| Triarylphosphate | agent plastifiant | 2.96 % |
| TDMAMP 2,4,6 | modificateur de polymères | 0.74 % |

### Exemple 3:

On prépare une peinture selon l'invention antisalissure autopolissable sans cuivre ni étain, notée exemple 3, selon un mode opératoire similaire à celui utilisé dans l'exemple 1, en mélangeant les produits suivants:

| Constituants | Fonction | Parties en poids |
|---|---|---|
| Copolymère 55/5 | | 10.40 % |
| Copolymère 60/124 | | 5.30 % |
| Mélange de solvants oxygénés | | 43.20 % |
| Pyrithione de zinc en poudre | agent biocide | 27.00 % |
| Polyoléfine fluorée en poudre | polymère hydrophobe | 1.50 % |
| Dioxyde de titane type rutile | pigment colorant | 1.90 % |
| Noir de carbone | pigment colorant | 0.30 % |
| Triéthylamine | agent neutralisant | 0.70 % |
| BYK P 104 S | agent mouillant | 0.70 % |
| Triarylphosphate | agent plastifiant | 5.00 % |
| TDMAMP 2,4,6 | modificateur de polymères | 4.00 % |

### Exemple 4:

On prépare une peinture selon l'invention antisalissure autopolissable sans cuivre ni étain, notée exemple 4, selon un mode opératoire similaire à celui utilisé dans l'exemple 1, en mélangeant les produits suivants:

| Constituants | Fonction | Parties en poids |
|---|---|---|
| Copolymère 55/5 | | 10.50 % |
| Copolymère 60/124 | | 5.40 % |
| Mélange de solvants oxygénés | | 43.60 % |
| Pyrithione de zinc en poudre | agent biocide | 27.40 % |
| Polyoléfine fluorée en poudre | polymère hydrophobe | 1.50 % |
| Noir de carbone | pigment colorant | 1.10 % |
| BYK P 104 S | agent mouillant | 0.70 % |
| Triarylphosphate | agent plastifiant | 5.10 % |
| TDMAMP 2,4,6 | modificateur de polymères | 4.70 % |

### Exemple 5:

On prépare une peinture selon l'invention antisalissure autopolissable sans cuivre ni étain, notée exemple 5, selon un mode opératoire similaire à celui utilisé dans l'exemple 1, en mélangeant les produits suivants:

| Constituants | Fonction | Parties en poids |
|---|---|---|
| Copolymère 55/5 | | 10.40 % |
| Copolymère 60/124 | | 5.30 % |
| Mélange de solvants oxygénés | | 43.10 % |
| Pyrithione de zinc en poudre | agent biocide | 27.00 % |
| Polyoléfine fluorée en poudre | polymère hydrophobe | 1.50 % |
| Dioxyde de titane type rutile | pigment colorant | 1.90 % |
| Noir de carbone | pigment colorant | 0.30 % |
| Triéthylamine | agent neutralisant | 0.70 % |
| BYK P 104 S | agent mouillant | 0.70 % |
| Triarylphosphate | agent plastifiant | 5.10 % |
| TDMAMP 2,4,6 | modificateur de polymères | 4.00 % |

### Exemple 6:

On prépare une peinture standard en mélangeant les matières suivantes:

| Constituants | Parties en poids |
|---|---|
| Copolymère CUTINOX 1120 ou BIOMET 304 | 31 % |
| Lécithine de soja | 0.3 % |
| Huile de ricin hydrogénée | 0.9 % |
| Stabilisant de viscosité | 1.8 % |
| Oxyde de zinc | 10.7 % |
| Oxyde cuivreux | 38.1 % |
| Dioxyde de titane de type rutile | 1 % |
| Solvant naphta 90/160 | 6 % |
| Xylène | 10.2 % |

On obtient ainsi une peinture, notée standard 1.

### Exemple 7:

On prépare une deuxième peinture standard en mélangeant les matières suivantes:

| Constituants | Parties en poids |
|---|---|
| Copolymère CUTINOX 1000 | 40.8 % |
| Lécithine de soja | 0.3 % |
| Huile de ricin hydrogénée | 0.6 % |
| Oxyde de zinc | 10 % |
| Oxyde de fer noir synthétique | 24 % |
| Noir de carbone | 2.4 % |
| Algicide | 7 % |
| Solvant naphta 90/160 | 11.5 % |
| Toluène | 3.4 % |

On obtient ainsi une peinture, notée standard 2.

### Exemple 8:

On prépare une troisième peinture standard en mélangeant les matières suivantes:

| Constituants | Parties en poids |
|---|---|
| Copolymère CUTINOX 1120 ou BIOMET 304 | 40.8 % |
| Lécithine de soja | 0.3 % |
| Huile de ricin hydrogénée | 0.6 % |
| Oxyde de zinc | 10 % |
| Oxyde de fer noir synthétique | 24 % |
| Noir de carbone | 2.4 % |
| Algicide | 7 % |
| Solvant naphta 90/160 | 11.5 % |
| Toluène | 3.4 % |

On obtient ainsi une peinture, notée standard 3, différente de la peinture standard 1 par sa vitesse d'érosion.

Des tests d'évaluation ont été réalisés sur ces peintures. Ces tests concernent d'une part l'efficacité biocide, d'autre part l'érodabilité.

Les tests d'efficacité biocide se font sur une longue période: des éprouvettes peintes sont immergées dans l'eau de mer naturelle pendant une période pouvant aller d'un an minimum à trois ans ou plus. Ces essais se déroulent sur des radeaux équipés de châssis porte-éprouvettes normalisés. Des peintures selon l'invention (peintures du type exemple 1) ont actuellement plus de deux ans d'immersion sans apparition significative de salissures marines.

Les tests accélérés d'érosion des peintures sont destinés à reproduire, avec un facteur d'accélération important, l'érosion des feuils de peinture en service sur une carène de navire. Ces tests sont réalisés à l'aide d'un dispositif comprenant un cylindre tournant revêtu des peintures d'essai, équipé d'une turbine accélérant fortement les phénomènes d'érosion superficielles grâce à un flux hydrodynamique puissant et régulier. Ce dispositif est décrit par exemple dans la demande de brevet français FR 2716971 au nom de l'Etat français.

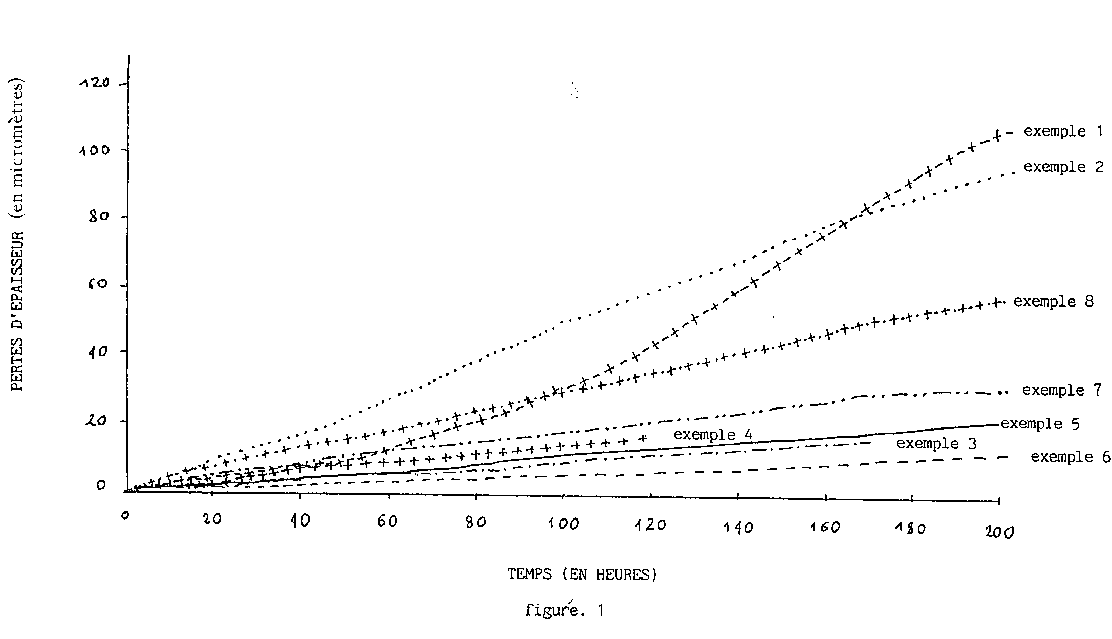

Les courbes représentées sur la figure 1 et obtenues à l'aide du dispositif décrit dans la demande citée ci-dessus permettent de visualiser la comparaison des vitesses d'érosion des différentes peintures autopolissables selon l'invention (exemples 1 à 5) et des peintures autopolissables standard (exemples 6 à 8). Les formulations selon les exemples 1 et 2 sont du type à érosion rapide, celles selon les exemples 3 à 5 ont des vitesses d'érosion comparables à celles des standards pour bâtiments de surface et sous-marins. Aussi, les peintures selon l'invention présentent, au choix, des vitesses d'érosion adaptées aux conditions d'utilisation.

## Revendications

1. Peintures antisalissures autopolissables destinées à être, appliquées sur un objet au moins partiellement immergé, notamment sur les coques de navires de surface ou de sous-marins, et contenant des constituants classiques des peintures tels que des solvants organiques, des pigments colorants, des agents mouillants, des agents dispersants ou des agents neutralisants, peintures caractérisées en ce qu'elles sont composées de:
- 5 à 60% massique d'au moins deux polymères ou copolymères (I) de la famille des polyacrylates d'alkyle ou des polyméthacrylates d'alkyle comprenant des fonctions acides carboxyliques, possédant des poids moléculaires compris entre 15 000 et 100 000 g.mol⁻¹, chacun des polymères ayant un indice d'acide différent,
- 0.1 à 50% massique d'au moins un composé polyaminé (Il) réagissant à température ambiante avec les fonctions carboxyliques des polymères (I)
- 0.1 à 60% massique d'au moins un composé organométallique dérivé du zinc, du fer, du manganèse ou du cobalt, à caractère biocide (III), à l'exclusion du cuivre et de l'étain
- 0 à 30% massique de polymères hydrophobes en poudre (IV), insolubles dans le milieu solvant de la peinture et non miscibles avec les liants principaux (I) et (II).

2. Peintures antisalissures autopolissables selon la revendication 1, caractérisées en ce que le premier des polyacrylates ou polyméthacrylates a un indice d'acide supérieur à 50, le deuxième un indice compris entre 2 et 50 et l'éventuel troisième compris entre 0 et 2.

3. Peintures antisalissures autopolissables selon la revendication 1, caractérisées en ce que la fonction ester des polyacrylates ou polyméthacrylates possède un nombre de carbone compris entre 1 et 4.

4. Peintures antisalissures autopolissables selon la revendication 3, caractérisées en ce que la fonction esters des polyacrylates ou polyméthacrylates est un alkyle linéaire.

5. Peintures antisalissures autopolissables selon la revendication 1, caractérisées en ce que le composé (II) possède une température d'ébullition supérieure à 100°C.

6. Peintures antisalissures autopolissables selon l'une des revendications 1 à 4, caractérisées en ce que le composé (Il) réagissant avec les polymères (I) possède une structure chimique du type: 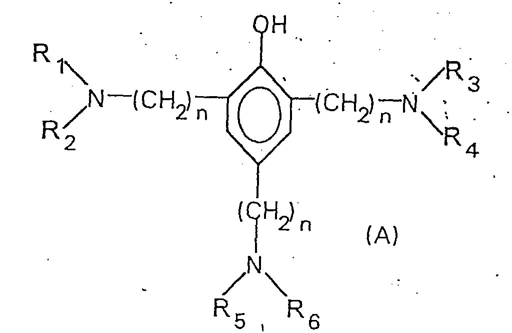 où R₁ à R₆ sont des alkyles, par exemple méthyles ou éthyles et n est un entier positif.

7. Peintures antisalissures autopolissables selon la revendication 6 caractérisées en ce que le composé (A) est le Tri-(DiMéthylaminoMéthyl)-2,4,6-phénol, R₁ à R₆ sont des radicaux méthyles et n=1.

8. Peintures antisalissures autopolissables selon l'une des revendications 1 à 4, caractérisées en ce que le composé (II) réagissant avec les polymères (I) possède une structure chimique cycloaliphatique du type: 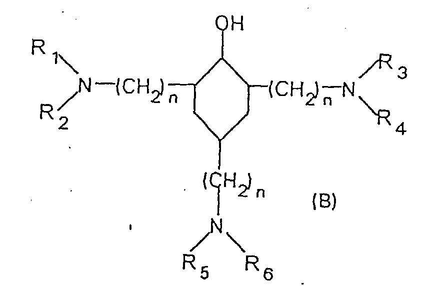 où R₁ à R₆ sont des alkyles, par exemple méthyles ou éthyles et n est un entier positif.

9. Peintures antisalissures autopolissables selon l'une des revendications 1 à 8, caractérisées en ce que les polymères hydrophobes (IV) sont des polyoléfines fluorées.

## Patentansprüche

1. Selbstpolierfähige, schmutzabweisende Farben zum Anstrich eines mindestens teilweise eingetauchten Objektes, insbesondere von Rümpfen von Ober- oder Unterwasser-Schiffen, welche klassische Bestandteile von Farben enthalten, insbesondere organische Lösemittel, Farbpigmente, Netzmittel, Dispersionsmittel oder Neutralisationsmittel, dadurch gekennzeichnet, daß sie folgende Zusammensetzung aufweisen:
- 5 bis 60 % spezifisches Volumen von mindestens zwei Polymeren oder Mischpolymerisaten (I) der Familie der Alkyl-Polyacrylate oder der Alkyl-Polymethakrylate mit Carbonsäurefunktionen; mit Molekulargewichten zwischen 15 000 und 100 000 g.mol⁻¹, wobei jedes Polymer eine unterschiedliche Säurezahl aufweist,
- 0,1 bis 50 % spezifisches Volumen von mindestens einer Polyaminverbindung (II), welche bei Umgebungstemperatur reagiert, mit den Carboxylfunktionen der Polymere (I),
- 0,1 bis 60 % spezifisches Volumen von mindestens einer organometallischen Verbindung als Zink-, Eisen-, Mangan- oder Kobaltderivat, mit biozider Eigenschaft (III) (mit Ausnahme von Kupfer und Zinn),
- 0 bis 30 % spezifisches Volumen von wasserabweisenden, pulverförmigen Polymeren (IV), welche im Lösemedium der Farbe nicht lösbar und mit den wesentlichen Bindemitteln (I) und (II) nicht mischbar sind.

2. Selbstpolierfähige, schmutzabweisende Farben gemäß Patentanspruch 1, dadurch gekennzeichnet, daß das erste Polyacrylat oder Polymethacrylat eine Säurezahl von über 50, das zweite eine Säurezahl zwischen 2 und 50 und das eventuell anwesende dritte eine Säurezahl zwischen 0 und 2 aufweist.

3. Selbstpolierfähige, schmutzabweisende Farben gemäß Patentanspruch 1, dadurch gekennzeichnet, daß die Kohlenstoffzahl der Esterfunktion der Polyacrylate oder Polymethacrylate zwischen 1 und 4 liegt.

4. Selbstpolierfähige, schmutzabweisende Farben gemäß Patentanspruch 3, dadurch gekennzeichnet, daß die Esterfunktion der Polyacrylate oder Polymethacrylate ein lineares Alkyl ist.

5. Selbstpolierfähige, schmutzabweisende Farben gemäß Patentanspruch 1, dadurch gekennzeichnet, daß die Verbindung (II) eine Siedetemperatur von über 100°C aufweist.

6. Selbstpolierfähige, schmutzabweisende Farben gemäß einem der Patentansprüche 1 bis 4, dadurch gekennzeichnet, daß die mit den Polymeren (I) reagierende Verbindung (II) eine chemische Struktur vom folgenden Typ aufweist: 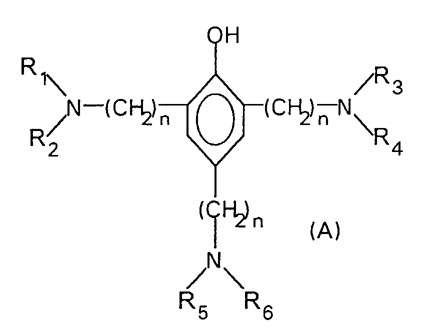 wobei R₁ bis R₆ Alkyle sind, zum Beispiel Methyle oder Äthyle, und n eine positive ganze Zahl ist.

7. Selbstpolierfähige, schmutzabweisende Farben gemäß Patentanspruch 6, dadurch gekennzeichnet, daß die Verbindung (A) das Tri-(DimethylaminoMethyl)-2,4,6-Phenol ist, R₁ bis R₆ methyle Radikale sind und n=1.

8. Selbstpolierfähige, schmutzabweisende Farben gemäß einem der Patentansprüche 1 bis 4, dadurch gekennzeichnet, daß die mit den Polymeren (I) reagierende Verbindung (II) eine cycloalphatische chemische Struktur vom folgenden Typ aufweist: 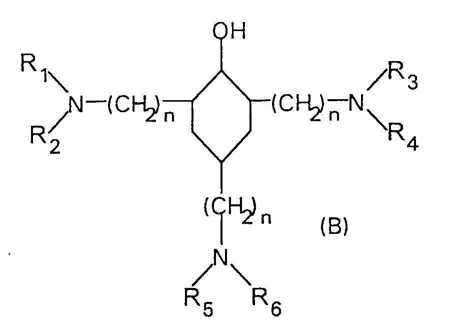 wobei R₁ bis R₆ Alkyle sind, zum Beispiel Methyle oder Äthyle, und n eine positive ganze Zahl ist.

9. Selbstpolierfähige, schmutzabweisende Farben gemäß einem der Patentansprüche 1 bis 8, dadurch gekennzeichnet, daß die wasserabweisenden Polymere (IV) Fluor-Polyolefine sind.

## Claims

1. Self-polishing antifouling paints designed to be applied to objects that are at least partially immersed, in particular to hulls of surface ships or of submarines, and containing conventional paint constituents such as organic solvents, coloring pigments, wetting agents, dispersing agents or neutralizing agents, said paints being characterized in that they are composed of:
in the range 5% by weight to 60% by weight of at least two polymers or copolymers (I) of the family of alkyl polyacrylates or of alkyl polymethacrylates containing carboxylic acid functions, having molecular weights lying in the range 15,000 g.mol⁻¹ to 100,000 g.mol⁻¹, each of the polymers having a different acid number;
in the range 0.1% by weight to 50% by weight of at least one polyamine compound (II) reacting at ambient temperature with the carboxylic functions of the polymers (I);
in the range 0.1% by weight to 60% by weight of at least one organometallic compound (III) having biocidal properties and derived from zinc, from iron, from manganese, or from cobalt, but not from copper or from tin; and
in the range 0% by weight to 30% by weight of hydrophobic polymers in powder form (IV) that are insoluble in the solvent medium of the paint, and that are non-miscible with the main binders (I) and (II).

2. Self-polishing antifouling paints according to claim 1, characterized in that the first one of the polyacrylates or polymethacrylates has an acid number that is greater than 50, the second one of them having an acid number lying in the range 2 to 50, and any third one of them having an acid number lying in the range 0 to 2.

3. Self-polishing antifouling paints according to claim 1 or 2, characterized in that the ester function of the polyacrylates or polymethacrylates has a carbon number lying in the range 1 to 4.

4. Self-polishing antifouling paints according to claim 3, characterized in that the ester function of the polyacrylates or polymethacrylates is a linear alkyl.

5. Self-polishing antifouling paints according to claim 1, characterized in that the compound (II) has a boiling point greater than 100°C.

6. Self-polishing antifouling paints according to any one of claims 1 to 4, characterized in that the compound (II) reacting with the polymers (I) has a chemical structure of the following type: 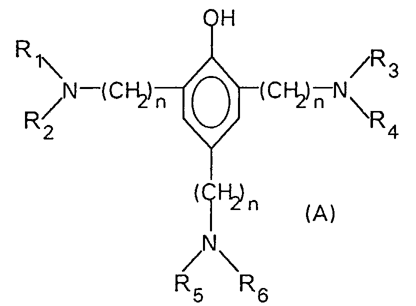 where R₁ to R₆ are alkyls, e.g. methyls or ethyls, and n is a positive integer.

7. Self-polishing antifouling paints according to claim 6, characterized in that the compound (A) is Tri-(DiMethylAminoMethyl)-2,4,6-Phenol, R₁ to R₆ are methyl radicals, and n = 1.

8. Self-polishing antifouling paints according to any one of claims 1 to 4, characterized in that the compound (II) reacting with the polymers (I) has a cycloaliphatic chemical structure of the following type: 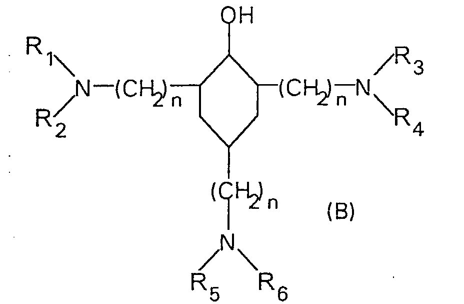 where R₁ to R₆ are alkyls, e.g. methyls or ethyls, and n is a positive integer.

9. Self-polishing antifouling paints according to any one of claims 1 to 8, characterized in that the hydrophobic polymers (IV) are fluorinated polyolefins.
